# EUROPÄISCHE PATENTSCHRIFT

(11) **EP 0 515 380 B1**
(45) Veröffentlichungstag und Bekanntmachung des Hinweises auf die Patenterteilung: **26.04.1995**
(21) Anmeldenummer: 91901418.3
(22) Anmeldetag: 09.01.1991
(51) Int. Cl.: B23K 9/10

(54) **WECHSELSTROMQUELLE ZUM SCHWEISSEN**
ALTERNATIVE CURRENT SOURCE FOR WELDING
SOURCE DE COURANT ALTERNATIF POUR SOUDAGE

(30) Priorität: 15.02.1990 DE 4004667
(43) Veröffentlichungstag der Anmeldung: 02.12.1992
(73) Patentinhaber: MILLER ELECTRIC MANUFACTURING COMPANY, Appleton, WI 54911 (US)
(72) Erfinder: BODEWIGS, Peter, D-4000 Düsseldorf 30 (DE)
(74) Vertreter: Türk, Gille, Hrabal, Leifert
(86) Internationale Anmeldenummer: DE9100012
(87) Internationale Veröffentlichungsnummer: WO9112922

(56) Entgegenhaltungen:
- BE-A- 666 250
- DE-A- 2 758 033
- DE-A- 3 113 671

## Beschreibung

Die Erfindung betrifft eine Wechselstromquelle zum Schweißen, insbesondere für die WIG- und Elektrodenschweißung, zur Erzeugung von Wechselestrom aus Drehstrom.

Beim Schweißen von Metallen, die nichtleitende und/oder hochschmelzende Oxide bilden, nach dem WIG-Verfahren, ist zum Entfernen der Oxidhaut entweder mit umgekehrter Polarität zu arbeiten (Pluspol an der Elektrode), was aber nur bei kleinen Stromstärken möglich ist wegen der zu großen Wärmeentwicklung am Schweißbrenner, oder es ist mit Wechselstrom zu arbeiten, was der gängigen Praxis entspricht.

Zum Erzeugen eines pulsierenden Gleichstromes aus Drehstrom für Schweißzwecke ist es bekannt (DE-A-3 113 671), einen Gleichrichter zu verwenden, welcher einen Drehstromtransformator und sechs elektronische Schalter in Form von Thyristoren aufweist, die jeweils an das ausgangsseitige Ende einer von sechs Phasenwicklungen der in Doppelsternschaltung ausgeführten Transformatorsekundärwicklung angeschlossen sind, während die anderen Enden der Phasenwicklungen gemeinsam an eine Glättungsdrossel mit Mittelanzapfung angelegt sind. Mit dieser bekannten Schweißstromquelle kann man pulsierenden Gleichstrom mit beliebig gewählten Halbwellen erzeugen.

Beim Elektrodenschweißen mit Gleichstrom treten häufig Blaswirkungen auf, die das Beherrschen des Lichtbogens unmöglich machen. Auch hier ist der Einsatz von Wechselstrom erforderlich.

Nach dem Stand der Technik kommen hierfür Schweißtransformatoren zum Einsatz, die primärseitig an zwei Phasen des Drohstromnetzes angeschlossen sind und bei denen der Schweißstrom durch Streujochkern, Transductor oder Thyristoren mit Phasenanschnittsteuerung verstellt wird.

Derartige Stromquellen weisen den Nachteil einer hohen Netzaufnahme auf, die schnell bei den überlicherweise erforderlichen Schweißströmen den zur Verfügung stehenden Anschlußwert übersteigt. Ein weiterer Nachteil ist die unsymmetrische Belastung des Drehstromnetzes.

Um diese Nachteile auszuschalten, wurden in jüngster Zeit Stromquellen entwickelt, die an alle drei Phasen da Netzes angeschlossen sind und einen Drehstrombrückengleichrichter sowie einen nachgeschalteten Thyristor- oder Transistor-Wechselrichter enthalten. Gegenüber den herkömmlichen Transformatoren mit Thyristoren sind derartige Stromquellen aufwendig und teuer.

Der Erfindung liegt daher die Aufgabe zugrunde, mit vergleichsweise geringem Aufwand eine Wechselstromquelle zu schaffen, die alle drei Phasen des Drehstromnetzes symmetrisch belastet.

Erfindungsgemäß wird diese Aufgabe durch die im Patentanspruch beschriebene Schaltung gelöst. Die Stromquelle besteht im wesentlichen aus einem Drehstromtransformator, einer Drossel und sechs preiswerten Thyristoren niedriger Sperrspannung für Netzfrequenzanwendungen sowie einer Schaltung zu deren sequenzieller Ansteuerung.

Die Erfindung ist in der Zeichnung dargestellt und wird im folgenden näher beschrieben.
Figur 1 zeigt das Schaltbild einer erfindungsmäßigen Wechselstromquelle und
Fig. 2 zeigt eine Wellenform einer erfindungsgemäßen Wechselspannung.

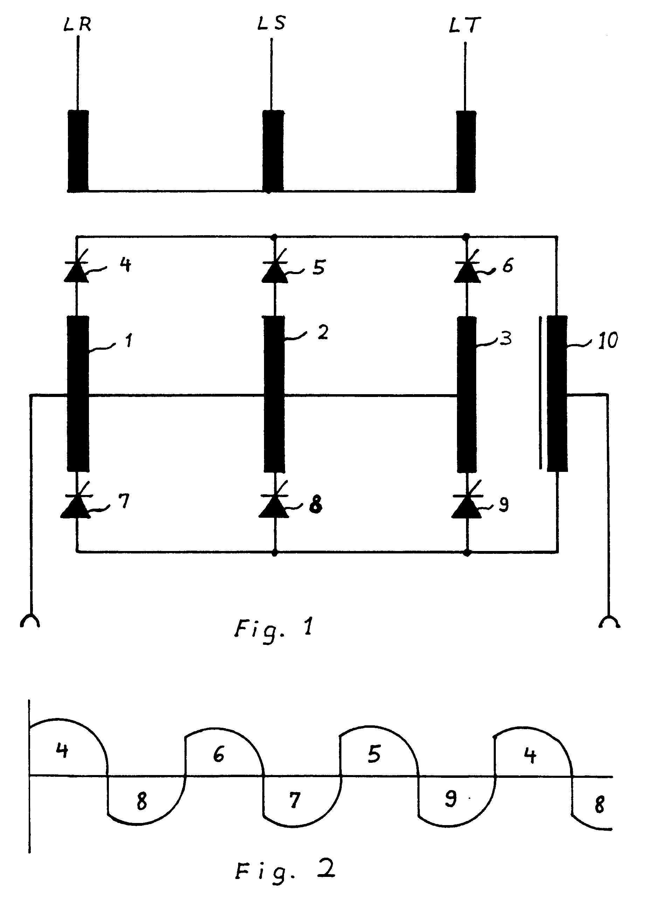

Zum besseren Verständnis der Funktion der Schaltung gemäß Fig.1 sei nur der obere Teil der sekundärseitigen Trafowicklung 1, 2, 3 und der Thyristoren 4, 5, 6 sowie der Drossel 10 betrachtet. Dieser Schaltungsausschnitt läßt eine Sternschaltung erkennen. Das gleiche gilt, für sich allein betrachtet, auch für den unteren Teil der Schaltung mit den umgekehrt gepolten Thyristoren 7. 8, 9.

Wird bei der Sternschaltung der Phasenwinkel nur bis maximal 120° aufgesteuert, so ist immer nur ein Thyristor leitend. Werden die Thyristoren 4, 5 und 6 sequentiell angesteuert, so entsteht ausgangsseitig eine Gleichspannung mit 150 Hz Pulsfrequenz.

Werden in der in Fig.1 gezeigten Schaltung die Thyristoren in folgender Sequenz angesteuert: 4 - 8 - 6 - 7 - 5 - 9 - 4 - 8..., so entsteht ausgangsseitig eine Wechselspannung mit 75 Hz, deren Verlauf in Figur 2 dargestellt ist.

Die Drossel 10 dient zur Glättung des Schweißstroms, da sie in gleicher Richtung durchflossen wird. Die negativen Halbwellen fließen vom Wicklungsanfang, die positiven vom Wicklungsende zur Mittelanzapfung.

Der mit der Erfindung erzielbare Vorteil besteht also darin, daß durch das Schaltungskonzept und die Ansteuersequenz eine im Aufbau sehr einfache, und mit nur sechs Thyristoren und simplen Bauteilen auch billige, Wechselstromquelle geschaffen wird, die das Drehstromnetz symmetrisch belastet und die Phasenaufnahme senkt.

## Patentansprüche

1. Wechselstromquelle zum Schweißen, insbesondere zum WIG- und Elektroden-Schweißen, welche Wechselstrom aus Drehstrom erzeugt, mit einem Drehstromtransformator, sechs elektronischen Schaltern (4 bis 9), vorzugsweise Thyristoren, und einer Drossel (10) mit Mittelanzapfung, **dadurch gekennzeichnet,** daß die drei Sekundärwicklungen (1 bis 3) des Transformators Mittelanzapfungen aufweisen, die zusammengeschaltet einen Schweißstromanschluß bilden, daß die gleichsinnigen Anfänge der Sekundärwicklungen auf die Kathoden von drei Thyristoren (4, 5, 6) geführt sind, deren Anoden zusammengefaßt auf den Wicklungsanfang der Drossel (10) geführt sind, daß die gleichsinnigen Enden der drei Sekundärwicklungen (1, 2, 3) auf die Anoden von drei weiteren Thyristoren (7, 8, 9) geführt sind, deren Kathoden zusammengefaßt auf das Wicklungsende der Drossel (10) geführt sind, deren Mittelanzapfung den zweiten Schweißstromanschluß bildet, und daß die Thyristoren (4 bis 9) sequentiell derart getriggert werden, daß auf die Ansteuerung des Thyristors (4) am Wicklungsanfang des ersten Trafoschenkels (1) die Ansteuerung des Thyristors (8) am Wicklungsende des zweiten Schenkels (2) folgt, dann die Ansteuerung des Thyristors (6) am Wicklungsanfang des dritten Schenkels (3), worauf die Ansteuerung des Thyristors (7) am Wicklungsende des ersten Schenkels (1) folgt usw., ferner die Thyristoren durch Phasenanschnittsteuerung als Schweißstromstellglied arbeiten und daß der Phasenwinkel auf maximal 120° begrenzt ist zur Vermeidung von stromquelleninternen Kurzschlüssen zwischen den Phasen, so daß durch den derart erzeugten sekundärseitigen Wechselstrom primärseitig alle drei Phasen des Netzes gleichmäßig belastet werden.

## Claims

1. Alternating current source for welding, in particular for TIG and electrode welding, which generates an alternating current from a three-phrase current, comprising a three-phase current transformer, six electronic switches (4 to 9), preferably thyristors, and an equalising coil (10), characterised in that the three secondary windings (1 to 3) of the transformer have centre taps which when interconnected form a welding current connection, that the equidirectional origins of the secondary windings lead to the cathodes of three thyristors (4, 5, 6), the anodes of which together lead to the origin of the winding of the choke coil (10), that the equidirectional ends of the three secondary windings (1, 2, 3) lead to the anodes of three further thyristors (7, 8, 9), the cathodes of which together lead to the end of the winding of the choke coil (10), the centre tap of which forms the second welding current connection, and that the thyristors (4 to 9) are triggered sequentially in such a manner that activation of the thyristor (4) at the origin of the winding of the first leg (1) of the transformer is followed by activation of the thyristor (8) at the and of the winding of the second leg (2), followed by activation of the thyristor (6) at the origin of the winding of the third leg (3), followed by activation of the thyristor (7) at the end of the winding of the first leg (1), etc., and furthermore the thyristors operate as welding current control elements by means of phase-angle control and that the phase angle is limited to a maximum of 120° in order to prevent current source short circuits between the phases, so that all three phases of the network are uniformly loaded at the primary side as a result of the alternating current generated in this manner at the secondary side.

## Revendications

1. Source de courant alternatif pour le soudage, en particulier pour le soudage TIG et le soudage au moyen d'électrodes produisant du courant alternatif à partir d'un courant continu, comprenant un transformateur de courant alternatif, six commutateurs électroniques (4 à 9), de préférence des thyristors, ainsi qu'un circuit de réactance (10) incluant une prise médiane,
**caractérisée en ce que**
les trois bobinages secondaires (1 à 3) du transformateur comprennnent des prises médianes qui, interconnectées, forment une connexion de soudage, et en ce que les extrémités sérielles avant des bobinages secondaires sont dirigées sur les cathodes des trois thyristors (4, 5, 6) dont les anodes sont dirigées en commun sur l'extrémité avant de bobinage du circuit de réactance (10), et en ce que les extrémités sérielles des trois bobinages secondaires (1, 2, 3) sont dirigées sur les anodes de trois thyristors (7, 8, 9) supplémenatires, dont les cathodes sont dirigées en commun sur l'extrémité arrière du bobinage du circuit de réactance (10), dont la prise médiane forme la deuxième connexion de soudage, et en ce que les thyristors (4 à 9) sont séquentiellement asservis de telle sorte que l'excitation du thyristor (4) situé à l'extrémité avant du bobinage de la première aile (1) du transformateur est suivie par l'excitation du thyristor (8) situé à l'extrémité arrière de la deuxième aile (2) du transformateur, suivie par l'excitation du thyristor (6) situé à l'extrémité avant du bobinage de la troisième aile (3), suivie par l'excitation du thyristor (7) situé à l'extrémité arrière de la première aile (1) et ainsi de suite, et en ce que, par ailleurs, au moyen d'une régulation de déphasage, les thyristors fonctionnent comme inductance de réglage du courant de soudage, et en ce que, afin d'éviter des courts-circuits internes de la source de courant entre les phases, l'angle de phase est limité à une valeur maxi de 120°, assurant ainsi qu'au moyen du courant alternatif généré du côté secondaire, l'ensemble des trois phases est uniformément chargé du côté primaire.
